# EUROPEAN PATENT SPECIFICATION

(11) **EP 4 316 865 B1**
(45) Date of publication and mention of the grant of the patent: **26.02.2025**
(21) Application number: 22189111.2
(22) Date of filing: 05.08.2022
(51) Int. Cl.: B60B 21/02, B60B 21/04

(54) **RIM FOR VEHICLE WHEEL**
FELGE FÜR FAHRZEUGRAD
JANTE POUR ROUE DE VÉHICULE

(43) Date of publication of application: 07.02.2024
(73) Proprietor: Titan Italia S.p.A., 41034 Finale Emilia (MO) (IT)
(72) Inventor: Collini, Massimo, 25017 Lonato del Garda, Brescia (IT); Bertoglio, Paolo, 40017 San Giovanni in Persiceto, Bologna (IT); Falegnami, Danilo, 44100 Ferrara (IT)
(74) Representative: Luppi Intellectual Property S.r.l.

(56) References cited:
- DE-B4- 102011 121 596
- GB-A- 2 595 217
- US-B2- 8 991 938

## Description

### Background of the invention

The present invention relates to a wheel rim, in particular a rim for a wheel of a vehicle.

Specifically, but not exclusively, the present invention can be advantageously applied to an agricultural vehicle.

In particular, reference is made to a wheel rim made according to the preamble to the first claim. Such a rim is already known, for example from patent **publication** US 8 991 938 B2**.**

Various aspects of the prior art are improvable. Firstly, it is desirable to have available a rim that makes the assembly of the wheel easier and more practical (which includes, as is known, fitting the tyre on the rim) than the rims described in US 8 991 938 B2**.** Secondly, it is desirable to reduce the risk of damage to the tyre, like abrasions or the like (in particular, to the beads of the tyre), during assembly. Another limit of the prior art lies in the fact that the structure of the rim is weakened especially in certain zones like, for example, in the welding zones of an additional element (as disclosed in WO 2017/195099 A1), or in the zones connected to curvature radiuses that are such as to cause relatively high necking in the step of forming the rim.

### Summary of the invention

One object of the invention is to propose a rim that is able to overcome one or more of the aforesaid limits and drawbacks of the prior art.

One object of the invention is to provide an alternative solution to the problem of providing a wheel rim on which to assemble a tyre.

One advantage is to make a rim onto which it is possible to fit a tyre in a particularly easy and practical manner.

One advantage is to enable a tyre to be fitted to the rim without risk of damage to the tyre, in particular to the beads thereof.

One advantage is gradual and reliable positioning of the tyre in a correct position on the rim during the inflation step.

One advantage is to create a rim with a relatively robust structure, in particular a rim made in one piece (without additional elements made on a base body) and/or devoid of zones with high necking.

One advantage is to make available a wheel rim, in particular for a vehicle wheel, which is constructionally simple and cheap.

Such objects and advantages and yet others, are achieved by a wheel rim according to one or more of the claims set out below. In particular, the independent claim discloses a rim according to the invention and the appended claims disclose particularly advantageous forms of the invention.

In one embodiment, a wheel rim comprises an annular body with a central annular portion extending around an axis, two peripheral annular portions for coupling with the beads of a tyre and two intermediate annular portions that connect the two peripheral annular portions to the central annular portion, in which each intermediate annular portion comprises a tilted wall with an external frustoconical surface that forms an angle α with a plane that is perpendicular to the aforesaid axis, in which the angle α is less than 58°, for example comprised in the range 50° ± 5°, and the central connecting wall comprises an external convex annular surface connected to the aforesaid frustoconical surface.

### Short description of the drawings

The invention can be better understood and implemented with reference to the attached drawings that illustrate embodiments thereof by way of non-limiting example, in which:

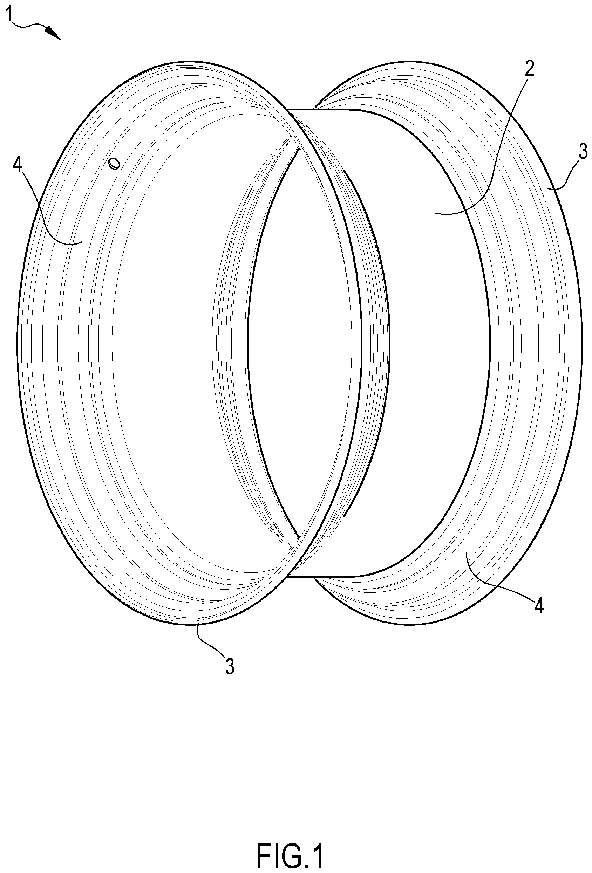

Figure 1 shows a perspective view of a first embodiment of a wheel rim made according to the present invention;

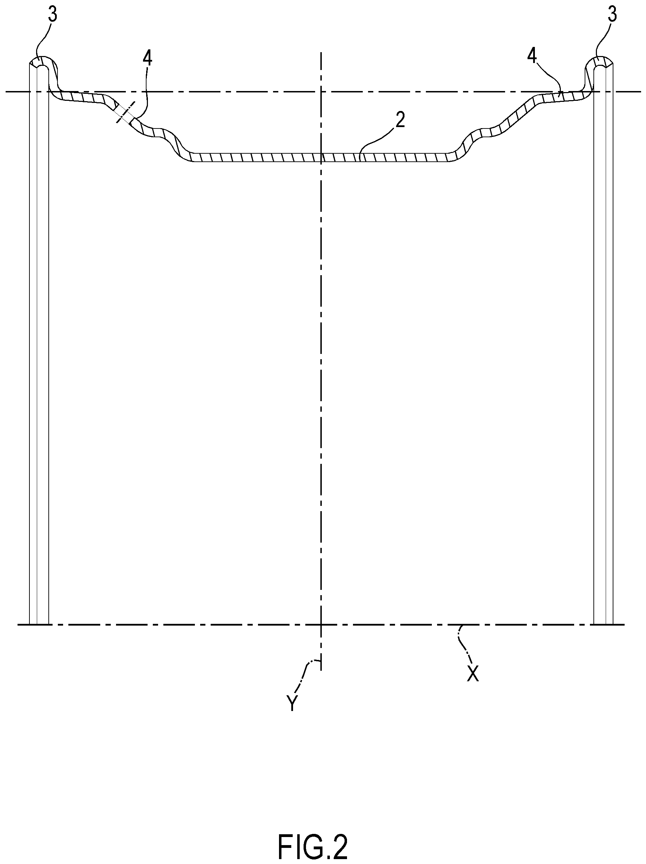

Figure 2 shows a half section of the rim of Figure 1 along a section plane passing through the axis of rotation of the wheel;

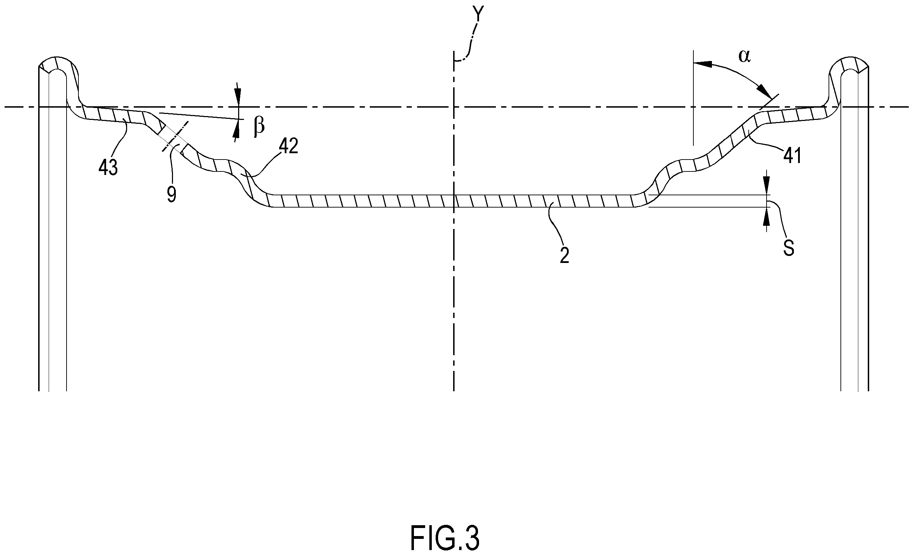

Figure 3 shows an enlarged detail of Figure 2;

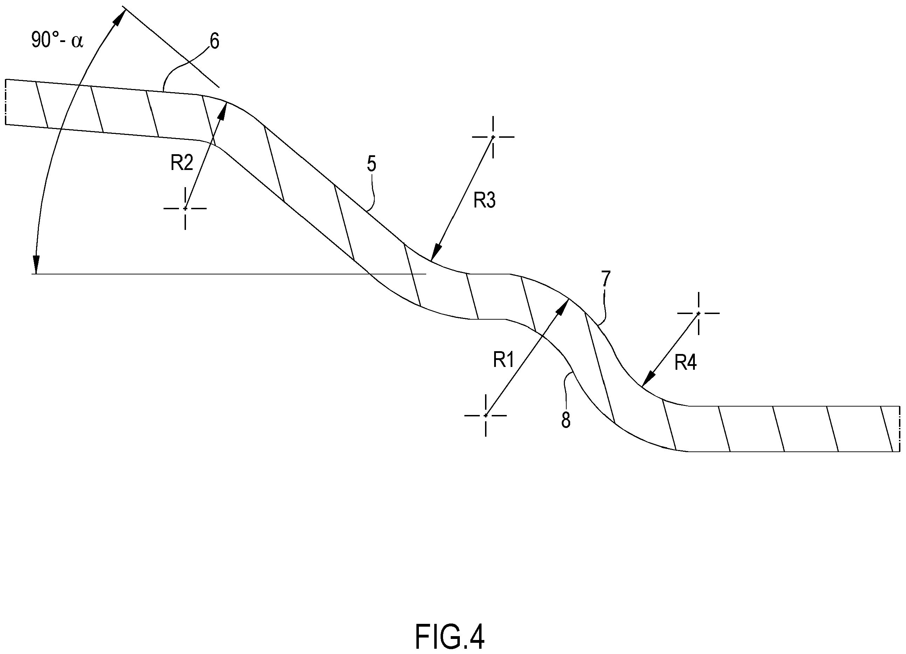

Figure 4 shows an enlarged detail of Figure 3;
Figure 5 shows a section of a detail of a second embodiment of a wheel rim made according to the present invention.

### Detailed description

With reference to the aforesaid figures, identical elements of different embodiments have been indicated, for simplicity of representation, by the same number. With 1, a wheel rim has been indicated overall, in particular usable for a wheel of a vehicle like, for example, an agricultural vehicle. The wheel may comprise, in particular, a tyre that has to be fitted to the rim 1.

The rim 1 comprises an annular body. The annular body is made in a single piece (as in the illustrated embodiment), for example in pressed sheet metal. The annular body may be made, in particular, by cold plastic deformation of a semifinished workpiece.

The annular body comprises a central annular portion 2. The central annular portion 2 extends around an axis X. The axis X may substantially coincide, in particular, with the axis of rotation of the assembled wheel. The central annular portion 2 may comprise, in particular, an external revolution surface extending around the axis X and/or an internal revolution surface extending around the axis X (where "external" and "internal" refers to the axis X). The central annular portion 2 may be, as in this specific example, of cylindrical shape. The central annular portion 2 may be, in particular, configured for enabling a wheel hub to be inserted that will be connected to the rim (by connecting means, for example of known type). The central annular portion 2 may have a thickness S that is the same, in particular, as a value comprised in the range 6 ± 3 mm, or in the range 6 ± 2 mm, or in the range 6 ± 1 mm.

The annular body may be shaped, in particular, in a symmetrical (specular) manner around a plane Y of symmetry perpendicular to the axis X.

The annular body comprises two peripheral annular portions 3 located on two sides opposite (in an axial direction) with respect to the central annular portion 2. Each peripheral annular portion 3 is more distant from the axis X than the central annular portion 2. The two peripheral annular portions 3 are configured for coupling with the two beads of a tyre. Each peripheral annular portion 3 may comprise, in particular, an edge extending radially (with reference to the axis X) configured for retaining the tyre on the rim 1 in an assembled configuration of the wheel.

The annular body comprises two intermediate annular portions 4. Each intermediate annular portion 4 is arranged for joining the central annular portion 2 to a respective peripheral annular portion 3. Each intermediate annular portion 4 may be, in particular, more distant from the aforesaid axis X than the central annular portion 2. Each peripheral annular portion 3 may be, in particular, more distant from the aforesaid axis X than the respective intermediate annular portion 4.

Each intermediate annular portion 4 comprises a tilted wall 41, a central connecting wall 42 and a peripheral connecting wall 43. For each intermediate annular portion 4, the respective central connecting wall 42 may be configured, in particular, for joining the respective tilted wall 41 to the central annular portion 2. For each intermediate annular portion 4, the respective peripheral connecting wall 43 may be configured, in particular, for joining the respective tilted wall 41 to the respective peripheral annular portion 3. For each intermediate annular portion 4, the respective peripheral connecting wall 43 may be, in particular, more distant from the aforesaid axis X than the respective central connecting wall 42.

For each intermediate annular portion 4, the respective tilted wall 41 comprises a frustoconical surface 5 facing radially outwards, where "radially" means with reference to the aforesaid axis X. The external frustoconical surface 5 of each tilted wall 41 forms an angle α with a plane that is perpendicular to the aforesaid axis X. This angle α may be, in particular, less than 60°. This angle α may be, in particular, less than 58°. This angle α may be, in particular, less than 55°. This angle α may be, in particular, greater than 40°. This angle α may be, in particular, greater than 40° and less than 60°. This angle α may be, in particular, comprised in the range α = 50° ± 8°. This angle α may be, in particular, comprised in the range α = 50° ± 6°. This angle α, according to the invention, is comprised in the range α = 50° ± 4°. This angle α may be, in particular, comprised in the range α = 50° ± 2°. This angle α may be, as in the specific embodiment illustrated, comprised in the range 50° ± 1°.

For each intermediate annular portion 4, the respective peripheral connecting wall 43 comprises a frustoconical surface 6 facing radially outwards. For each intermediate annular portion 4, the frustoconical surface 6 of the respective peripheral connecting wall 43 forms an angle β with a direction parallel to the aforesaid axis X. This angle β may be, in particular, less than 10°. This angle β is comprised in the range β = 5° ± 3°. This angle β may be, in particular, comprised in the range β = 5° ± 2°. This angle β may be, in particular, comprised in the range β = 5° ± 1°. This angle β may be, as in this specific embodiment, equal to 5°. For each intermediate annular portion 4, the frustoconical surface 6 of the respective peripheral connecting wall and the frustoconical surface 5 of the respective tilted wall 41 may form, in particular, an angle comprised between 30° and 40°, or an angle comprised in the range 35° ± 3°, or an angle comprised in the range 35° ± 1°.

For each intermediate annular portion 4, the frustoconical surface 6 of the respective peripheral connecting wall and the frustoconical surface 5 of the respective tilted wall 41 are coaxial to one another, both extending around the axis X.

For each intermediate annular portion 4, the respective central connecting wall 42 comprises a convex annular surface 7 facing radially outwards and/or a concave annular surface 8 facing radially inwards. For each intermediate annular portion 4, the respective central connecting wall 42 has a thickness S1 (in particular S1 = S), for example a thickness S1 equal to a value comprised in the range 6 ± 3 mm, or in the range 6 ± 1 mm.

The rim 1 may comprise, in particular, a valve hole 9 arranged on one of the two tilted walls 41.

A convexity of the convex annular surface 7 of each central connecting wall 42 may have, in particular, a radius of curvature R1 (measured on a section plane passing through the axis X). It is possible to provide, in particular, R1 > 1.5 * S1, or R1 > 1.8 * S1, or R1 > 2.0 * S1, R1 > 2.2 * S1. It is possible to provide, in particular, R1 < 4.0 * S1, or R1 < 3.5 * S1, or R1 < 3.0 * S1, or R1 < 2.5 * S1. It is possible to provide, in particular, 1.5 * S1 < R1 < 3.0 * S1. It is possible to provide, in particular, 1.8 * S1 < R1 < 2.8 * S1, or 2.0 * S1 < R1 < 2.5 * S1. It is possible to provide, in particular, for R1 being comprised in the range 14 ± 2 mm.

For each intermediate annular portion 4, the respective tilted wall 41 has a thickness S2 (in particular, S2 = S1), for example a thickness S2 equal to a value comprised in the range 6 ± 3 mm, or in the range 6 ± 1 mm. The external frustoconical surface 6 of each peripheral connecting wall 43 may be, in particular, connected to the external frustoconical surface 5 of the respective tilted wall 41 by means of an annular connecting surface with a radius of curvature R2 (measured on a section plane passing through the axis X). According to the invention, it provides 1.5 * S2 < R2 < 2.5 * S2. It is possible to provide, in particular, 1.8 * S2 < R2 < 2.2 * S2. It is possible to provide, in particular, for R2 being comprised in the range 12 ± 2 mm.

The external convex annular surface 7 of each central connecting wall 42 may be, in particular, connected to the external frustoconical surface 5 of the respective tilted wall 41 by means of an annular connecting surface with a radius of curvature R3 (measured on a section plane passing through the axis X). It is possible to provide, in particular, 1.5 * S2 < R3 < 3.0 * S2. It is possible to provide, in particular, 1.8 * S2 < R3 < 2.5 * S2. It is possible to provide, in particular, for R3 being comprised in the range 13 ± 2 mm.

For each intermediate annular portion 4, the external convex annular surface 7 of the respective central connecting wall 42 may be, in particular, connected to an external surface of the central annular portion 2 by means of an annular connecting surface with a radius of curvature R4. It is possible to provide, in particular, 1.2 * S < R10 < 2.0 * S. It is possible to provide, in particular, 1.4 * S < R10 < 1.8 * S. It is possible to provide, in particular, for R4 being comprised in the range 10 ± 2 mm.

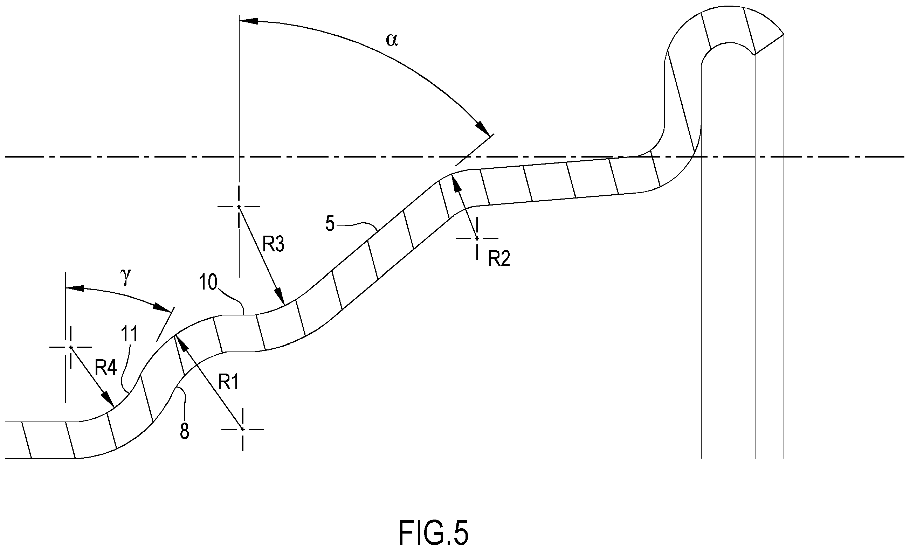

For each intermediate annular portion 4, it is possible to provide (as in the embodiment of figure 5) a first external connecting surface 10 connecting the annular connecting surface to the radius of curvature R3 and the annular connecting surface to the radius of curvature R1. The first external connecting surface 10 may be, in particular, of cylindrical shape with an axis coinciding with the axis X. The first external connecting surface 10 may have, in particular, a relatively reduced axial dimension, for example of a few tenths of a millimetre. Each first connecting external surface 10 may be, in particular, arranged between the respective convex annular surface 7 and the frustoconical surface 5 of the respective tilted wall 41.

For each intermediate annular portion 4, it is possible to provide (as in the embodiment of figure 5) a second external connecting surface 11 connecting the annular connecting surface to the radius of curvature R1 and the annular connecting surface to the radius of curvature R4. The second external connecting surface 11 may be, in particular, of frustoconical shape around the axis X, forming an angle γ with a plane that is perpendicular to the axis X. This angle γ may be comprised, in particular, in the range 20° ± 5°, or in the range 20° ± 2°. The second external connecting surface 11 may have, in particular, a relatively reduced axial dimension, for example of a few tenths of a millimetre. Each second external connecting surface 11 may be, in particular, arranged between the respective convex annular surface 7 and the central annular portion 2.

It is observed that the various sections of the annular body may have thicknesses that are the same as one another. In particular, the thickness S of the central annular portion 2 may be equal to the thickness S1 of the central connecting wall 42 and/or to the thickness S2 of the tilted wall 41 and/or to the thickness S3 of the peripheral connecting wall 43 and/or to the thickness S4 of the peripheral annular portion 3.

The particular combination of the convex annular surface 7 and of the frustoconical surface 5, in which the convex annular surface 7 is connected on a side outside the frustoconical surface 5 and on a side inside the central annular portion 2, and in which the tilt of the frustoconical surface 5 is such as to form the aforesaid angle α, enables the following technical advantages to be unexpectedly achieved.

Firstly, the task of assembling the wheel is facilitated owing to the fact that the tyre is inserted into the rim practically and immediately in a position that is suitable for performing the subsequent assembly steps.

Secondly, during the step of inflating the tyre positioned on the wheel, the tyre settles so naturally and gradually as to significantly reduce the risk of damage to the tyre like, for example, abrasions or excessive stress on the beads.

Another advantage lies in the fact that the connecting surfaces between the various sections of the annular body made by pressing a single piece by cold deformation have radiuses of curvature (R1, R2, R3, R4) that as has been established cause relatively small necking, so that the pressed annular body that is obtained is provided with great resistance to wear.

## Claims

1. Wheel rim, said rim comprising an annular body made in one piece with a central annular portion (2), two peripheral annular portions (3) and two intermediate annular portions (4), said central annular portion (2) extending around an axis (X) and being configured for arrangement around a wheel hub, said two peripheral annular portions (3) being located on two sides that are axially opposite said central annular portion (2), each peripheral annular portion (3) being more distant from said axis (X) than said central annular portion (2) and being configured for coupling with a bead of a tyre, each intermediate annular portion (4) being arranged to join said central annular portion (2) to a respective peripheral annular portion (3), each intermediate annular portion (4) comprising a tilted wall (41), a central connecting wall (42) that joins said tilted wall (41) to said central annular portion (2), and a peripheral connecting wall (43) that joins said tilted wall (41) to the respective peripheral annular portion (3), said peripheral connecting wall (43) being more distant from said axis (X) than said central connecting wall (42), said tilted wall (41) comprising a frustoconical surface (5) facing radially outwards, where "radially" is intended with reference to said axis; **wherein** said frustoconical surface (5) of said tilted wall (41) forms an angle α **included in the range α = 50° ± 4°** with a plane that is perpendicular to said axis (X) and **wherein** said central connecting wall (42) comprises a convex annular surface (7) facing radially outwards and connected on one side to said frustoconical surface (5) of said tilted wall (41) and on one axially opposite side to said central annular portion (2);
**characterized in that:**
- **said peripheral connecting wall (43) comprises a frustoconical surface (6) facing radially outwards and forming an angle β comprised in the range β** = **5° ± 3° with a direction parallel to said axis (X);**
- **said tilted wall (41) has a thickness S2 and said frustoconical surface (6) of said peripheral connecting wall (43) is connected to said frustoconical surface (5) of said tilted wall (41) by means of an annular connecting surface with a radius of curvature R2, being 1.5** * **S2 < R2 < 2.5** * **S2.**

2. Rim according to claim 1, wherein said angle α is included in the range α = 50° ± 2°.

3. Rim according to any one of the preceding claims, wherein said tilted wall (41) has a thickness S2 and wherein said external convex annular surface (7) of said central connecting wall (42) is connected to said external frustoconical surface (5) of said tilted wall (41) by means of an annular connecting surface with a radius of curvature R3, being 1.5 * S2 < R3 < 3.0 * S2, in particular being 1.8 * S2 < R3 < 2.5 * S2.

4. Rim according to any one of the preceding claims, wherein said central connecting wall (42) comprises a concave annular surface (8) facing radially inwards.

5. Rim according to any one of the preceding claims, wherein said radius of curvature R2 **is 1.8** * **S2 < R2 < 2.2 * S2.**

6. Rim according to any one of the preceding claims, wherein said central connecting wall (42) has a thickness S1 and wherein a convexity of said convex annular surface (7) of said central connecting wall (42) has a radius of curvature R1, being 1.5 * S1 < R1 < 3.0 * S1.

7. Rim according to any one of the preceding claims, wherein said central annular portion (2) has a thickness S and wherein said external convex annular surface (7) of said central connecting wall (42) is connected to an external surface of said central annular portion (2) by means of an annular connecting surface with a radius of curvature R4, being 1.2 * S < R4 < 2.0 * S.

8. Rim according to any one of the preceding claims, wherein each intermediate annular portion (4) comprises a first external surface (10) of cylindrical shape coaxial with said axis (X), said first external surface (10) being arranged to join said convex annular surface (7) to said frustoconical surface (5) of said tilted wall (41).

9. **Rim according to any one of the preceding claims, wherein said angle β is comprised in the range β** = **5° ± 2°.**

10. **Rim according to any one of the preceding claims, wherein said angle β is comprised in the range β = 5° ± 1°.**

11. **Rim according to any one of the preceding claims, wherein said frustoconical surface (6) of said peripheral connecting wall (43) and said frustoconical surface (5) of said tilted wall (41) form an angle comprised in the range 35° ± 3°.**

12. **Rim according to any one of the preceding claims, wherein said frustoconical surface (6) of said peripheral connecting wall (43) and said frustoconical surface (5) of said tilted wall (41) form an angle comprised in the range 35° ± 1°.**

## Patentansprüche

1. Radfelge, wobei die Felge einen ringförmigen Körper umfasst, der aus einem Stück mit einem zentralen ringförmigen Abschnitt (2), zwei peripheren ringförmigen Abschnitten (3) und zwei dazwischenliegenden ringförmigen Abschnitten (4) hergestellt ist, wobei sich der zentrale ringförmige Abschnitt (2) um eine Achse (X) erstreckt und zur Anordnung um eine Radnabe konfiguriert ist, wobei die beiden peripheren ringförmigen Abschnitte (3) auf zwei Seiten angeordnet sind, die dem zentralen ringförmigen Abschnitt (2) axial gegenüberliegen, wobei jeder periphere ringförmige Abschnitt (3) weiter von der Achse (X) entfernt ist als der zentrale ringförmige Abschnitt (2) und zur Kopplung mit einem Wulst eines Reifens konfiguriert ist, wobei jeder dazwischenliegende ringförmige Abschnitt (4) so angeordnet ist, dass er den zentralen ringförmigen Abschnitt (2) mit einem jeweiligen peripheren ringförmigen Abschnitt (3) verkoppelt, wobei jeder dazwischenliegende ringförmige Abschnitt (4) eine geneigte Wand (41), eine zentrale Verbindungswand (42), die die geneigte Wand (41) mit dem zentralen ringförmigen Abschnitt (2) verkoppelt, und eine periphere Verbindungswand (43), die die geneigte Wand (41) mit dem jeweiligen peripheren ringförmigen Abschnitt (3) verkoppelt, umfasst, wobei die periphere Verbindungswand (43) weiter von der Achse (X) entfernt ist als die zentrale Verbindungswand (42), wobei die geneigte Wand (41) eine kegelstumpfförmige Oberfläche (5) umfasst, die radial nach außen weist, wobei "radial" in Bezug auf die Achse gemeint ist; wobei die kegelstumpfförmige Oberfläche (5) der geneigten Wand (41) einen Winkel α im Bereich α = 50° ± 4° mit einer Ebene bildet, die senkrecht zur Achse (X) steht, und wobei die zentrale Verbindungswand (42) eine konvexe ringförmige Oberfläche (7) umfasst, die radial nach außen weist und auf einer Seite mit der kegelstumpfförmigen Oberfläche (5) der geneigten Wand (41) und auf einer axial gegenüberliegenden Seite mit dem zentralen ringförmigen Abschnitt (2) verbunden ist;
**dadurch gekennzeichnet, dass:**
- die periphere Verbindungswand (43) eine kegelstumpfförmige Oberfläche (6) aufweist, die radial nach außen weist und mit einer Richtung parallel zu der Achse (X) einen Winkel β bildet, der im Bereich β = 5° ± 3° liegt;
- die geneigte Wand (41) eine Dicke S2 aufweist und die kegelstumpfförmige Oberfläche (6) der peripheren Verbindungswand (43) mit der kegelstumpfförmigen Oberfläche (5) der geneigten Wand (41) mittels einer ringförmigen Verbindungsoberfläche mit einem Krümmungsradius R2 verbunden ist, der 1,5 * S2 < R2 < 2,5 * S2 beträgt.

2. Felge nach Anspruch 1, wobei der Winkel α im Bereich α = 50° ± 2° liegt.

3. Felge nach einem der vorhergehenden Ansprüche, wobei die geneigte Wand (41) eine Dicke S2 aufweist und wobei die äußere konvexe ringförmige Oberfläche (7) der zentralen Verbindungswand (42) mit der äußeren kegelstumpfförmigen Oberfläche (5) der geneigten Wand (41) mittels einer ringförmigen Verbindungsoberfläche mit einem Krümmungsradius R3 verbunden ist, der 1,5 * S2 < R3 < 3,0 * S2 beträgt, insbesondere 1,8 * S2 < R3 < 2,5 * S2, beträgt.

4. Felge nach einem der vorhergehenden Ansprüche, wobei die zentrale Verbindungswand (42) eine konkave, ringförmige Oberfläche (8) aufweist, die radial nach innen weist.

5. Felge gemäß einem der vorhergehenden Ansprüche, wobei der Krümmungsradius R2 1,8 * S2 < R2 < 2,2 * S2 beträgt.

6. Felge gemäß einem der vorhergehenden Ansprüche, wobei die zentrale Verbindungswand (42) eine Dicke S1 aufweist und wobei eine Konvexität der konvexen ringförmigen Oberfläche (7) der zentralen Verbindungswand (42) einen Krümmungsradius R1 aufweist, der 1,5 * S1 < R1 < 3,0 * S1 beträgt.

7. Felge gemäß einem der vorhergehenden Ansprüche, wobei der zentrale ringförmige Abschnitt (2) eine Dicke S aufweist und wobei die äußere konvexe ringförmige Oberfläche (7) der zentralen Verbindungswand (42) mit einer äußeren Oberfläche des zentralen ringförmigen Abschnitts (2) mittels einer ringförmigen Verbindungsoberfläche mit einem Krümmungsradius R4 verbunden ist, der 1,2 * S < R4 < 2,0 * S beträgt.

8. Felge nach einem der vorhergehenden Ansprüche, wobei jeder ringförmige Zwischenabschnitt (4) eine erste äußere Oberfläche (10) mit zylindrischer Form aufweist, die koaxial zur Achse (X) verläuft, wobei die erste äußere Oberfläche (10) so angeordnet ist, dass sie die konvexe ringförmige Oberfläche (7) mit der kegelstumpfförmigen Oberfläche (5) der geneigten Wand (41) verkoppelt.

9. Felge nach einem der vorhergehenden Ansprüche, wobei der Winkel β im Bereich β = 5° ± 2° liegt.

10. Felge nach einem der vorhergehenden Ansprüche, wobei der Winkel β im Bereich β = 5° ± 1° liegt.

11. Felge nach einem der vorhergehenden Ansprüche, wobei die kegelstumpfförmige Oberfläche (6) der peripheren Verbindungswand (43) und die kegelstumpfförmige Oberfläche (5) der geneigten Wand (41) einen Winkel im Bereich 35° ± 3° bilden.

12. Felge nach einem der vorhergehenden Ansprüche, wobei die kegelstumpfförmige Oberfläche (6) der peripheren Verbindungswand (43) und die kegelstumpfförmige Oberfläche (5) der geneigten Wand (41) einen Winkel im Bereich 35° ± 1° bilden.

## Revendications

1. Jante de roue, ladite jante comprenant un corps annulaire fait d'une seule pièce avec une partie annulaire centrale (2), deux parties annulaires périphériques (3) et deux parties annulaires intermédiaires (4), ladite partie annulaire centrale (2) s'étendant autour d'un axe (X) et étant conçue pour être disposée autour d'un moyeu de roue, lesdites deux parties annulaires périphériques (3) étant situées sur deux côtés axialement opposés à ladite partie annulaire centrale (2), chaque partie annulaire périphérique (3) étant plus éloignée dudit axe (X) que ladite partie annulaire centrale (2) et étant conçue pour s'accoupler avec un talon d'un pneu, chaque partie annulaire intermédiaire (4) étant agencée pour relier ladite partie annulaire centrale (2) à une partie annulaire périphérique (3) respective, chaque partie annulaire intermédiaire (4) comprenant une paroi inclinée (41), une paroi de liaison centrale (42) qui relie ladite paroi inclinée (41) à ladite partie annulaire centrale (2), et une paroi de liaison périphérique (43) qui relie ladite paroi inclinée (41) à la partie annulaire périphérique (3) respective, ladite paroi de liaison périphérique (43) étant plus éloignée dudit axe (X) que ladite paroi de liaison centrale (42), ladite paroi inclinée (41) comprenant une surface tronconique (5) orientée radialement vers l'extérieur, où le terme « radialement » s'entend par référence audit axe ; dans laquelle ladite surface tronconique (5) de ladite paroi inclinée (41) forme un angle α compris dans la plage α = 50° ± 4° avec un plan perpendiculaire audit axe (X) et dans laquelle ladite paroi de liaison centrale (42) comprend une surface annulaire convexe (7) orientée radialement vers l'extérieur et reliée d'un côté à ladite surface tronconique (5) de ladite paroi inclinée (41) et d'un côté axialement opposé à ladite partie annulaire centrale (2) ;
**caractérisée en ce que :**
- ladite paroi de liaison périphérique (43) comprend une surface tronconique (6) orientée radialement vers l'extérieur et formant un angle β compris dans la plage β = 5° ± 3° avec une direction parallèle audit axe (X) ;
- ladite paroi inclinée (41) a une épaisseur S2 et ladite surface tronconique (6) de ladite paroi de liaison périphérique (43) est reliée à ladite surface tronconique (5) de ladite paroi inclinée (41) au moyen d'une surface de liaison annulaire ayant un rayon de courbure R2, étant 1,5 * S2 < R2 < 2,5 * S2.

2. Jante selon la revendication 1, dans laquelle ledit angle α est compris dans la plage α = 50° ± 2°.

3. Jante selon l'une quelconque des revendications précédentes, dans laquelle ladite paroi inclinée (41) a une épaisseur S2 et dans laquelle ladite surface annulaire convexe extérieure (7) de ladite paroi de connexion centrale (42) est reliée à ladite surface tronconique extérieure (5) de ladite paroi inclinée (41) au moyen d'une surface de liaison annulaire avec un rayon de courbure R3, étant 1,5 * S2 < R3 < 3,0 * S2, en particulier étant 1,8 * S2 < R3 < 2,5 * S2.

4. Jante selon l'une quelconque des revendications précédentes, dans laquelle ladite paroi centrale de liaison (42) comprend une surface annulaire concave (8) orientée radialement vers l'intérieur.

5. Jante selon l'une quelconque des revendications précédentes, dans laquelle ledit rayon de courbure R2 est de 1,8 * S2 < R2 < 2,2 * S2.

6. Jante selon l'une quelconque des revendications précédentes, dans laquelle ladite paroi de liaison centrale (42) a une épaisseur S1 et dans laquelle une convexité de ladite surface annulaire convexe (7) de ladite paroi de liaison centrale (42) a un rayon de courbure R1, étant 1,5 * S1 < R1 < 3,0 * S1.

7. Jante selon l'une quelconque des revendications précédentes, dans laquelle ladite partie annulaire centrale (2) a une épaisseur S et dans laquelle ladite surface annulaire convexe extérieure (7) de ladite paroi de liaison centrale (42) est reliée à une surface extérieure de ladite partie annulaire centrale (2) au moyen d'une surface de liaison annulaire ayant un rayon de courbure R4, étant 1,2 * S < R4 < 2,0 * S.

8. Jante selon l'une quelconque des revendications précédentes, dans laquelle chaque partie annulaire intermédiaire (4) comprend une première surface extérieure (10) de forme cylindrique coaxiale avec ledit axe (X), ladite première surface externe (10) étant agencée pour relier ladite surface annulaire convexe (7) à ladite surface tronconique (5) de ladite paroi inclinée (41).

9. Jante selon l'une quelconque des revendications précédentes, dans laquelle ledit angle β est compris dans la plage β = 5° ± 2°.

10. Jante selon l'une quelconque des revendications précédentes, dans laquelle l'angle β est compris dans la plage β = 5° ± 1°.

11. Jante selon l'une quelconque des revendications précédentes, dans laquelle ladite surface tronconique (6) de ladite paroi de liaison périphérique (43) et ladite surface tronconique (5) de ladite paroi inclinée (41) forment un angle compris dans la plage 35° ± 3°.

12. Jante selon l'une quelconque des revendications précédentes, dans laquelle ladite surface tronconique (6) de ladite paroi de liaison périphérique (43) et ladite surface tronconique (5) de ladite paroi inclinée (41) forment un angle compris dans la plage 35° ± 1°.
